# EUROPÄISCHE PATENTSCHRIFT

(11) **EP 1 762 364 B1**
(45) Veröffentlichungstag und Bekanntmachung des Hinweises auf die Patenterteilung: **09.03.2016**
(21) Anmeldenummer: 05023631.4
(22) Anmeldetag: 28.10.2005
(51) Int. Cl.: B29C 47/68, B01D 29/01

(54) **Vorrichtung zum Filtrieren eines Fluids, insbesondere für kunststoffverarbeitende Anlagen**
Device for filtering a fluid, especially for plastic-processing installations
Dispositif pour filtrer un fluide, notamment dans des installations de transformation de matières plastiques

(30) Priorität: 10.09.2005 DE 102005043096
(43) Veröffentlichungstag der Anmeldung: 14.03.2007
(73) Patentinhaber: Nordson Holdings S.à r.l. & Co. KG, 40699 Erkrath (DE)
(72) Erfinder: Wöstmann, Stefan, 48336 Füchtorf (DE)
(74) Vertreter: Eisenführ Speiser

(56) Entgegenhaltungen:
- WO-A1-2004/026432
- GB-A- 2 073 038
- JP-A- S56 136 344
- JP-U- S48 109 246

## Beschreibung

Die Erfindung bezieht sich auf eine Vorrichtung zum Filtrieren eines Fluids, insbesondere eines verflüssigten Kunststoffes gemäß dem Oberbegriff des Hauptanspruches.

Eine gattungsbildende Einrichtung ist in der WO 2004/026432 A1 beschrieben. Die in dieser Literaturstelle beschriebene Einrichtung geht von einem Stand der Technik, beispielsweise gemäß der EP 0 798 098 B1 aus. Bei dieser bekannten Einrichtung sind im Strömungsweg des Fluids in einem quer zur Strömungsrichtung verschieblich gelagerten Siebträger mindestens zwei Filterelemente in entsprechenden Siebräumen angeordnet. Auf der Reinsiebseite ist ein einziger Verbindungskanal vorgesehen, so dass damit die Reinsiebseite der Filterelemente hydraulisch miteinander verbunden ist. Diese Anordnung erfordert ein langes Gehäuse und einen langen Siebträgerbolzen und damit auch einen längeren Fahrweg. Ein längerer Fahrweg wiederum erfordert eine größere hydraulische Zylinderanordnung und eine stärkere Auslegung aller Bauteile, die in Verbindung mit der hydraulischen Anordnung stehen.

Demgegenüber liegt der Einrichtung gemäß der gattungsbildenden Literaturstelle WO 2004/026432 A1, die die Merkmale der Präambel des Anspruchs 1 offenbart, die Aufgabe zugrunde, eine Anlage zu schaffen, bei der größtmögliche Sieboberflächen bei kleinstmöglichen Siebträgerdurchmessern und Siebwechselgehäusen erreichbar sind.

Auch aus der JP S56 136344 A, der JP S48 109246 U oder der GB 2 073 038 A sind gattungsgemäße Vorrichtungen zum Filtrieren bekannt.

Der vorliegenden Anmeldung liegt die Aufgabe zugrunde, den gattungsbildenden Stand der Technik dahingehend weiter zu verbessern, dass die Strömungsverhältnisse verbessert werden und die Strömungsmengen bei kleinerem Kanalquerschnitt erreichbar sind.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird vorgeschlagen, dass jeder Siebraum vorzugsweise vier Siebträgerteilkanäle aufweist, die vom Siebraum zum Abfuhrkanal hin gerichtet sind. Der eigentliche Abfuhrkanal schließt vorzugsweise mit acht Gehäuseteilkanälen an die Siebräume an, wobei diese vorzugsweise acht Gehäuseteilkanäle zum Abfuhrkanal hin zusammenlaufen.

Eine solche Anordnung ermöglicht gleiche Strömungsmengen gegenüber dem Stand der Technik bei kleinerem Kanalquerschnitt ohne Toträume.

Gemäß einem weiteren Merkmal der Erfindung ist vorgesehen, dass je zwei Siebträgerteilkanäle und je zwei Gehäuseteilkanäle in Längsachse des Siebträgers gesehen langgestreckt ausgebildet miteinander verbunden sind. Hierdurch wird bei manchen Kunststoffmaterialien ein strömungstechnisch angepasster Fließweg geschaffen, der zwar gegenüber dem vorher beschriebenen erfindungsgemäßen Ausführungsbeispiel fertigungstechnisch schwieriger ist, aber in Anbetracht der zu behandelnden Werkstoffe besser geeignet ist.

Die Gehäuseteilkanäle führen unter Zwischenschaltung von in einem Anbauteil vorgesehenen Sammelkanälen zum Abfuhrkanal hin.

Ein Ausführungsbeispiel der Erfindung wird nachfolgend anhand der Zeichnung erläutert. Die Zeichnung zeigt dabei in
- Fig. 1: eine Anordnung gemäß dem Stand der Technik, in
- Fig. 2: eine Anordnung mit je vier Siebträgerteilkanälen je Siebraum und insgesamt Gehäuseteilkanälen, in
- Fig. 3: eine Anordnung, bei der je zwei Gehäuseteilkanäle und Siebträgerteilkanäle in Form eines Langloches zusammengefasst sind, dass sich in Richtung der Längsachse des Siebträgers erstreckt und in
- Fig. 4: eine Draufsicht auf den Siebträger gemäß Fig. 3.

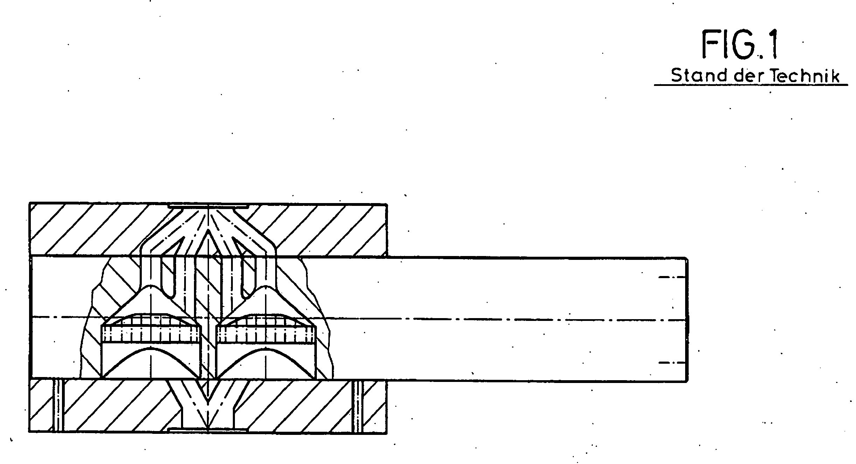

Bei der Ausführungsform zum Stand der Technik gemäß Fig. 1 ist erkennbar, dass je Siebraum zwei Siebträgerteilkanäle vorgesehen sind, die zu jeweils einem zugehörigen Gehäuseteilkanal führen, der dann zum Abfuhrkanal führt.

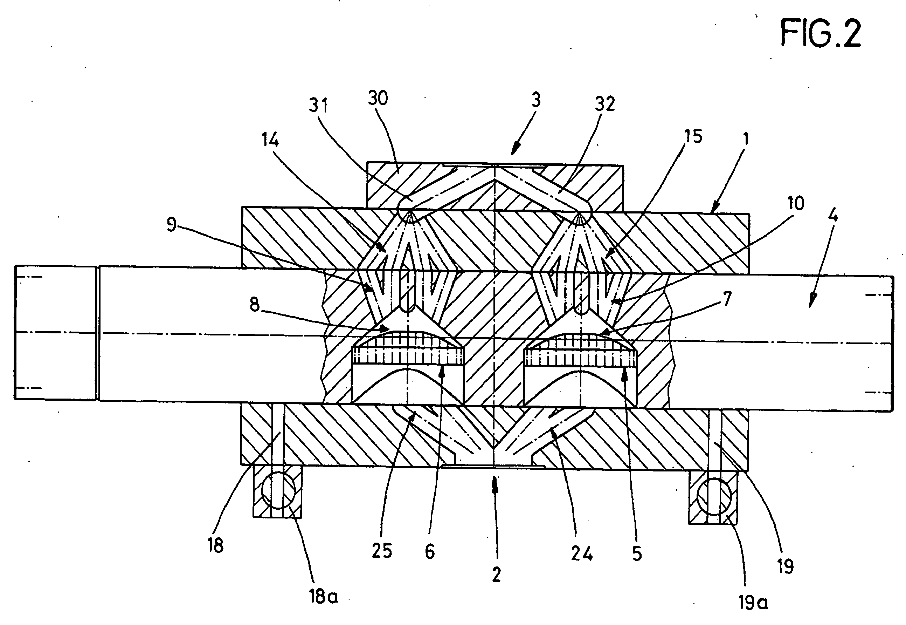

Bei der erfindungsgemäßen Anordnung gemäß Fig. 2 ist in einem Gehäuse 1 ein Siebträger 4 verschiebbar gelagert, wobei dieser Siebträger 4 Siebe oder Filterelemente 5, 6 trägt, die in entsprechenden Kavitäten angeordnet sind, so dass auf der Reinsiebseite Siebräume 7, 8 geschaffen werden. Im Gehäuse 1 ist ein Zufuhrkanal 2 vorgesehen, und in einem an das Gehäuse 1 anschließenden Anbauteil 30 ein Abfuhrkanal 3. Weiterhin sind im Gehäuse 1 Rückspülkanäle 18 und 19 angeordnet, die mit Absperrvorrichtungen 18a und 19a ausgerüstet sind.

Der Zufuhrkanal 2 teilt sich in zwei Zufuhrteilkanäle 24 und 25, während auf der Reinsiebseite an die Siebräume 7 und 8 Siebträgerteilkanäle 9 und 10 anschließen. Bei der in Fig. 2 dargestellten Ausführungsform schließen an den Siebraum 8 vier Siebträgerteilkanäle 9 an und an den Siebraum 7 vier Siebträgerteilkanäle 10.

Diese Siebträgerteilkanäle 9 und 10 münden in Gehäuseteilkanälen 14 und 15. so dass insgesamt acht Gehäuseteilkanäle vorgesehen sind. Diese Gehäuseteilkanäle 14 und 15 münden dann in Sammelkanäle 31 und 32, die zum Abfuhrkanal 3 hin führen.

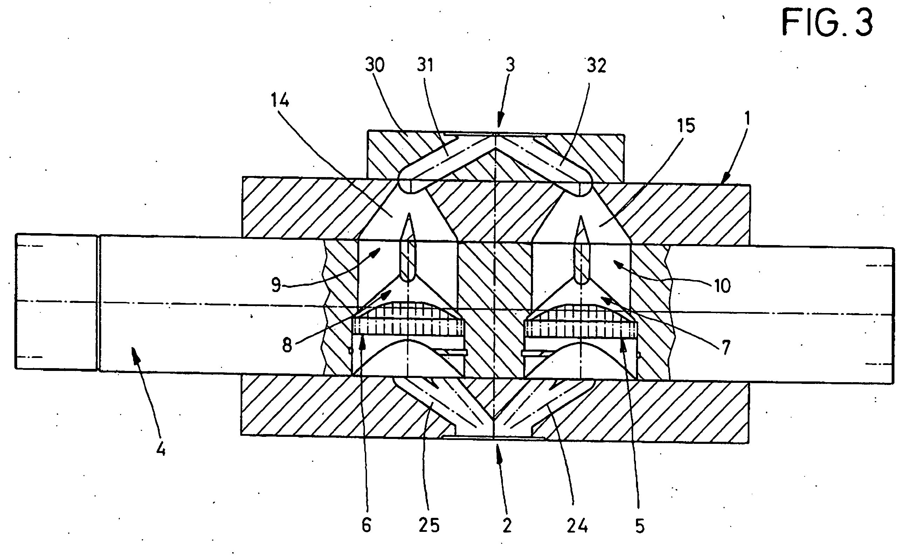

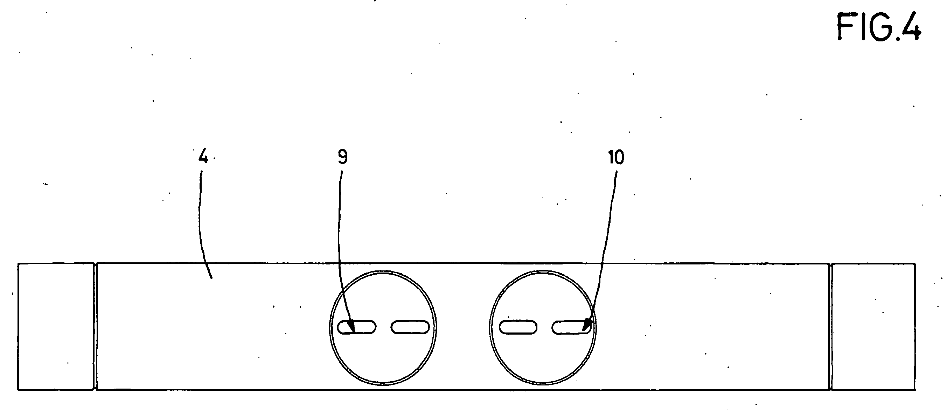

Bei der Ausführungsform gemäß Fig. 3, in der gleiche Bauteile mit gleichen Bezugszeichen versehen sind, sind - wie dies besonders deutlich die Fig. 4 zeigt - jeweils zwei Gehäuseteilkanäle 9 bzw. 10 in Längsachse des Siebträgers 4 gesehen zusammengefasst und bilden damit einen Langlochkanal.

Das gleiche gilt für die Gehäuseteilkanäle 14 und 15, so dass die Langlochkanäle des Siebträgers 4 mit Langlochkanälen des Gehäuses in Verbindung gebracht werden können, die ihrerseits mit den Sammelkanälen 31 und 32 in Verbindung kommen.

## Patentansprüche

1. Vorrichtung zum Filtrieren eines Fluids, insbesondere eines verflüssigten Kunststoffes, mit einem Gehäuse (1) mit mindestens einem Zufuhrkanal (2), einem Abfuhrkanal (3) und zwei auf der Seite des Zufuhrkanales (2) vorgesehenen Rückspülkanälen (18, 19), wobei im Strömungsweg des Fluids in einem quer zur Strömungsrichtung verschieblich gelagerten Siebträger (4) mindestens zwei Filterelemente (5, 6) in entsprechenden Siebräumen (7, 8) angeordnet und mit dem Zufuhrkanal (2) und dem Abfuhrkanal (3) in Verbindung bringbar sind und die durch Absperreinrichtungen (18a, 19a) absperrbaren Rückspülkanälen (18, 19) mit den Siebräumen (7, 8) auf der Anströmseite der in diesen angeordneten Filterelementen (5, 6) in Verbindung bringbar sind und weiterhin der Zufuhrkanal (2) in zwei Zufuhrteilkanäle (24, 25) aufgeteilt ist, **dadurch gekennzeichnet,**
a) **daß** jeder Siebraum (7, 8) mehr als zwei im Siebträger (4) ausgearbeitete Siebträgerteilkanäle(9, 10) aufweist, die vom Siebraum (7, 8) zum Abfuhrkanal (3) hin gerichtet sind,
b) der Abfuhrkanal (3) mehr als vier Gehäuseteilkanäle (14, 15) aufweist, die mit den Siebträgerteilkanälen (9, 10) verbindbar sind und die zum Abfuhrkanal (3) hin zusammenlaufen.

2. Vorrichtung nach Anspruch 1, **dadurch gekennzeichnet, daß** vier Siebträgerteilkanäle (9, 10) je Siebraum (7 oder 8) und acht Gehäuseteilkanäle (14, 15) vorgesehen sind.

3. Vorrichtung nach Anspruch 1 oder 2, **dadurch gekennzeichnet, daß** je zwei Siebträgerteilkanäle und je zwei Gehäuseteilkanäle in Längsachse des Siebträgers (4) gesehen langgestreckt ausgebildet miteinander verbunden sind.

4. Vorrichtung nach einem oder mehreren der vorhergehenden Ansprüche, **dadurch gekennzeichnet, daß** die Gehäuseteilkanäle (14, 15) unter Zwischenschaltung von in einem Anbauteil (30) vorgesehenen Sammelkanälen (31 und 32) zum Abfuhrkanal (3) führen.

## Claims

1. Device for filtering a fluid, in particular a liquefied plastic material, with a housing (1) with at least one inlet duct (2), one outlet duct (3) and two reversible-flow ducts (18, 19) provided on the side of the inlet duct (2), where filter carriers (4) with at least two filter elements (5, 6) in corresponding filter chambers (7, 8) are arranged in the flow path of the fluid in such a way as to move at right angles to the direction of flow, and can be made to connect with the inlet duct (2) and the outlet duct (3), and the reversible-flow ducts (18, 19), which can be blocked by blocking devices (18a, 19a), can be made to connect with the filter chambers (7, 8) on the inflow side of the filter elements (5, 6) arranged within these, and furthermore, where the inlet duct (2) is divided into two inlet section ducts (24, 25), **characterised in,**
a) **that** each of the filter chambers (7, 8) has more than two filter-carrier section ducts (9, 10) machined in the filter carrier (4) which are aligned from the filter chamber (7, 8) towards the outlet duct (3),
b) **that** the outlet duct (3) has more than four housing section ducts which can be made to connect with the filter-carrier section ducts (9, 10) and which merge (3) towards the outlet duct (3).

2. Device in accordance with claim 1, **characterised in that** four filter-carrier section ducts (9, 10) are provided in each filter chamber (7 or 8) and eight housing section ducts (14, 15) are also provided.

3. Device in accordance with claim 1 or claim 2, **characterised in that** two filter-carrier section ducts and two housing section ducts, viewed in the lengthwise axis of the filter carrier (4) are connected with each other when extended.

4. Device in accordance with one or several of the aforementioned claims, **characterised in that** the housing section ducts (14, 15) lead into the outlet duct (3) by way of merging ducts (31 and 32) arranged in an add-on part (30).

## Revendications

1. Dispositif pour filtrer un fluide, en particulier une matière plastique liquéfiée, avec un carter (1) comprenant au moins un conduit d'amenée (2), un conduit d'évacuation (3) et deux conduits (18, 19) de rinçage en sens inverse prévus sur le côté du conduit d'amenée (2), sachant que sur l'itinéraire d'écoulement du fluide, dans un support (4) filtrant en appui permettant de le déplacer transversalement au sens d'écoulement, sont disposés au moins deux éléments filtrants (5, 6) dans des compartiments filtrants (7, 8) correspondants, ces éléments pouvant être amenés en liaison avec le conduit d'amenée (2) et le conduit d'évacuation (3), et que les canaux de rinçage en sens inverse (18, 19) obturables par des dispositifs (18a, 19a) à cet effet peuvent être amenés en liaison avec les compartiments filtrants (7, 8) sur le côté afflux des éléments filtrants (5, 6) présents dans ces compartiments, et qu'en outre le conduit d'amenée (2) est partagé en deux conduits partiels d'amenée (24, 25), **caractérisé en ce**
a) **que** chaque compartiment filtrant (7, 8) présente plus de deux conduits partiels (9, 10) de support filtrant usinés dans le support filtrant (4), conduits qui sont orientés dans le sens allant du compartiment filtrant (7, 8) vers le conduit d'évacuation (3),
b) **que** le conduit d'évacuation (3) présente plus de quatre conduits partiels (14, 15) dans le carter, conduits qui sont reliables avec les conduits partiels (9, 10) de support filtrant et qui confluent vers le conduit d'évacuation (3).

2. Dispositif selon la revendication 1, **caractérisé en ce que** sont prévus quatre conduits partiels (9, 10) de support filtrant par compartiment filtrant (7 ou 8) et huit conduits partiels (14, 15) de carter.

3. Dispositif selon la revendication 1 ou 2, **caractérisé en ce que** respectivement deux conduits partiels de support filtrant et respectivement deux conduits partiels de carter sont configurés s'étendant en longueur selon l'axe longitudinal du support filtrant (4) et reliés entre eux.

4. Dispositif selon l'une ou plusieurs des revendications précédentes, **caractérisé en ce que** les conduits partiels (14, 15) de carter conduisent, par intercalage de conduits collecteurs (31 et 32) prévus dans une pièce rapportée (30), vers le conduit d'évacuation (3).
